# EUROPEAN PATENT APPLICATION

(11) **EP 2 193 827 A1**
(43) Date of publication of application: **09.06.2010**
(21) Application number: 08253903.2
(22) Date of filing: 05.12.2008
(51) Int. Cl.: A63F 13/12

(54) **Network enabled toy**

(71) Applicant: BRITISH TELECOMMUNICATIONS public limited company, London EC1A 7AJ (GB)
(72) Inventor: The designation of the inventor has not yet been filed
(74) Representative: Nash, Roger William

(57) **Abstract**

A network enabled toy is in wireless communication with a local gateway, which is communication with a gaming platform via a broadband network. The software resources needed to operate the toy are split between the network enabled toy, the local gateway and the gaming platform.

## Description

The present invention relates to a toy and in particular to a toy that can be connected to a communications network to alter or enhance its capabilities.

Recent advances in electronics has lead to children's' toys to be developed that incorporate increased levels of technology. The parallel development of the internet, and its adoption by consumers, has also lead to these toys having some limited capabilities to interact with communications networks. Examples of such toys may be found in, for example, US 5 873 765, US 6 012 961 & US 6 676 477. It is also well known to use games consoles, such as Playstation 3 or Xbox 360, for on line collaborative or competitive game playing.

According to the present invention there is provided a communications network comprising a gaming platform, the gaming platform being in communication with a user gateway, the user gateway being connected to the communications network and, in use, also being in communication with a gaming device, wherein the gaming platform is further connected to a communication interface, the communication interface enabling the connection of conventional communication devices to the gaming platform and, in use, with a gaming device.

The present invention allows a user to connect to the gaming platform using a conventional communications device, such as a mobile telephone, PSTN telephone, IP phone etc. This enables users who do not have a network enabled toy to connect to a gaming server and to other users with network enabled toys.

Embodiments of the present invention will now be described, by way of example only, with reference to the accompanying drawings in which:
Figure 1 shows a schematic depiction of a system according to an aspect of the present invention;
Figure 2 shows a schematic depiction of the functional components of a network enabled toy according to another aspect of the present invention;
Figure 3 shows a schematic depiction of a game logic vault according to an aspect of the present invention; and
Figure 4 shows a schematic depiction of a method according to the present invention by which a GLV may be deployed to a gaming platform, a gateway or a network enabled toy;
Figure 5 shows a schematic depiction of a gaming platform according to an aspect of the present invention;
Figure 6 shows a schematic depiction of a method according to the present invention by which a GLV may be deployed;
Figure 7 shows a schematic depiction of the game pad interface 400 according to an aspect of the present invention;
Figure 8 shows a schematic depiction of how the proxy defines functions;
Figure 9 shows schematic depiction of the flow of the mediation on how the input data will be mapped to output data;
Figure 10 shows a schematic depiction of a sequence by which a game is set up;
Figure 11 shows a schematic depiction of the operation of a system according to the present invention during a game session;
Figure 12 shows a schematic depiction of a process in which a voice message may be recorded after the end of a game session; and
Figure 13 shows a schematic depiction of a process which terminates a game session.

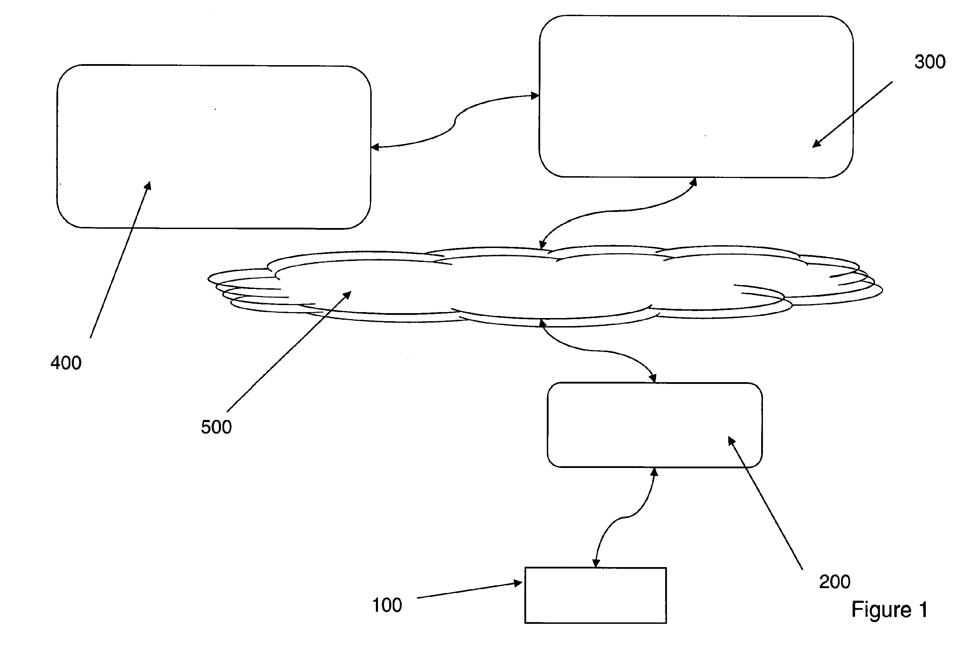

Figure 1 shows a schematic depiction of a system according to an aspect of the present invention. The system comprises a network enabled toy 100, a gateway 200, a gaming platform 300 and a game pad interface 400. Conventionally, the gateway 200 is co-located with the network enabled toy 100 and is connected to the gaming platform 300 via the internet (or similar network) 500.

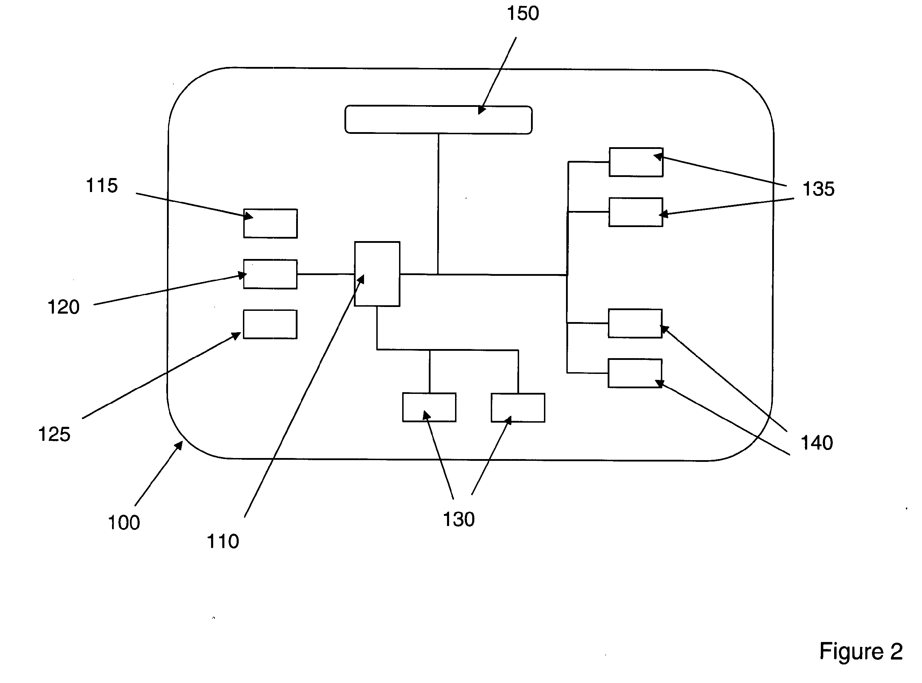

Figure 2 shows a schematic depiction of the functional components of a network enabled toy 100 according to another aspect of the present invention. The network enabled toy 100 comprises a processing unit 110, random access memory 115, fixed storage unit 120, removable storage unit 125 (for example Compact Flash, MMC, SD, XD cards, etc.), one or more sensor units 130 (for example GPS, gyroscope, clock, impact sensor, movement sensor, accelerometer etc.), one or more user input devices 135 (for example switches, buttons, voice detection, voice recognition, etc.), one or more user feedback devices 140 (for example display screen, lights, loudspeakers, force feedback units, etc) and a communications interface 150.

In use, one or more computer programs are stored on the fixed storage unit. These can be loaded into the random access memory for execution by the processing unit. The processing unit receives information from the one or more user input devices and/or the one or more sensor units to determine the operation of the game; data can be sent to the one or more feedback devices to inform a user of the status or progress of the game. The communications interface may be an integral component of the toy or it may be an additional component that can be inserted into a socket contained within the toy. Software to control the operation of the communications interface may be provided on the fixed storage unit or alternatively on a removable storage unit that can be inserted into the toy - such a storage unit may also comprise further computer software to provide additional functionality when the communications interface is inserted into the toy. The communications interface is preferably a wireless communications interface such as Bluetooth, WiFi or IrDA but may comprise a wired connection. The toy comprises a fixed functionality set when not connected to a gaming platform via a gateway. When connected to a gaming platform then the toy comprises a second functionality set that is extensible and can be user modified.

Although Figure 1 shows only a single network enabled toy, it will be apparent from the following description that a plurality of network enabled toys may be connected to the gateway in order to provide collaborative or competitive game play to a number of co-located players. Alternatively, one or more players could be located at a number of different locations and gaming data is routed between the associated gateways via one or more gaming platforms to provide the collaborative or competitive game play.

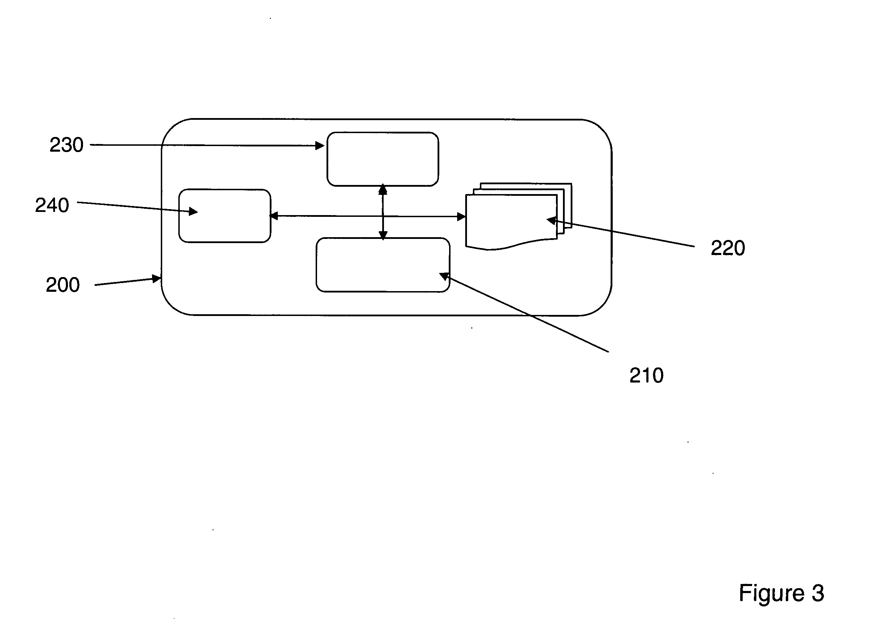

Referring to Figure 3, it can be seen that the gateway 200 comprises a communications interface 210, one or more game logic vaults 220 and a game manager client 230. The gateway provides an interface between the network enabled toy 100 and the gaming platform, preferably via a broadband network. The communications interface 210 is capable of communicating with the communications interface 150 of the network enabled toy, preferably using an appropriate wireless protocol.

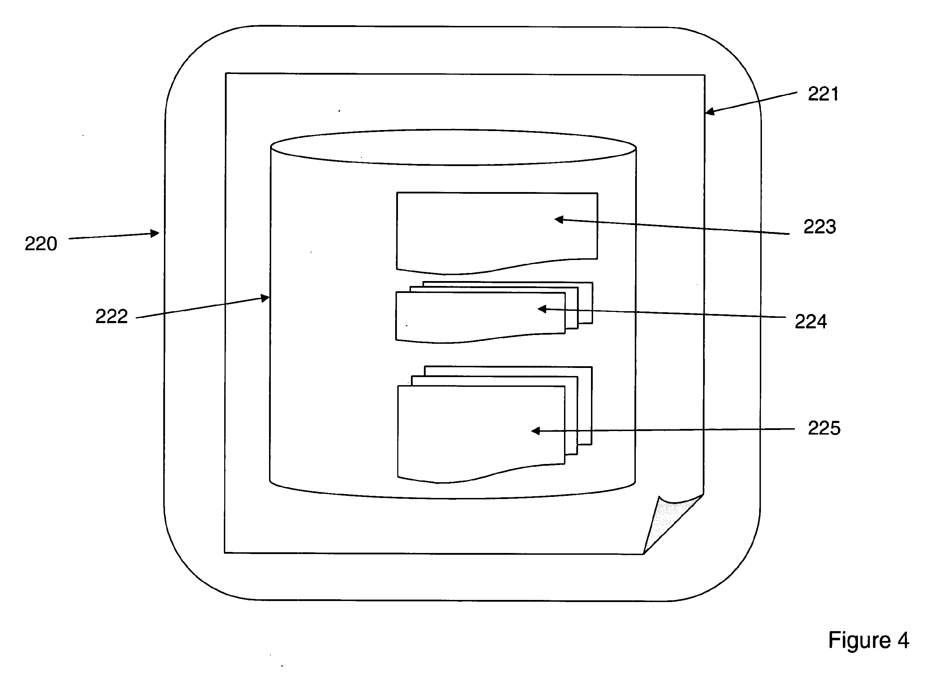

Figure 4 shows a schematic depiction of the game logic vault. The game logic vault (GLV) 220 comprises data which relates to game-play, game dependencies, player and setup settings. Figure 3 shows a schematic depiction of the structure of a GLV 220 which comprises an encryption layer 221, data archive 222, game logic 223, a plurality of XML files 224 and game dependency files 225. The contents of the GLV may be represented via a combination of compiled binary (eg: Java jar file) files, XML files, image, video and audio. The GLV comprises an encryption layer 221 to allow the content of the GLV to be protected against unapproved access and to enable easy and simple distribution of the GLV. The data archive 222 enables the various files that comprise the GLV to be collated into a single file. This simplifies the distribution, extraction and archiving of the files, whilst maintaining the file dependencies, links and related system information (for example directory structure, file formats, file creation dates, etc.) The game logic 223 comprises a compiled binary version of the game program. The game logic comprises the rules governing the game, the response of the toy to particular inputs, etc. In use, some or all of the game logic may be written to the network enabled toy to enhance the operation/capabilities of the toy. The XML files 224 comprise the configuration files that are accessed by the game logic to facilitate communication between the GLV and the gateway. This makes the GLV independent from the gateway such that a gateway is able to communicate with any GLV, as long as the GLV was developed in accordance to the appropriate APIs and standards. Using the information defined in the XML files, the gateway is able to be the link between the game logic and the gaming platform 300. The XML files further comprise user interface files that contain the various properties which determine the user interface (UI) that may be displayed to a user, via the gateway. For example, a file ui.xml, may allow the gateway to interpret the data from the game logic and then translate that to a UI rendered in English for display. By substituting a different UI file then the display may be rendered in a different language, for example Malay or Chinese. The game dependencies comprise additional data required by the game, for example the multimedia content which will be used by game logic to create the UI, such as libraries of graphics and audio assets. It can be seen that by separating the game logic, from the UI and the data used in the UI it is possible to update one of these items without needing to update either of the others. For example, the UI of a game may be updated without needing to modify the underlying game logic defining the game or the images, etc, that are used in the rendering the UI. A gateway may comprise one or more GLVs, with each GLV comprising data for one or more different games.

The game manager client 230 provides a range of different functionalities, one of which is providing communication with a game manager server 310, which is comprised within the gaming platform 300. The game manager client has an adaptive capability that enables it to be deployed across a range of different devices, such as a broadband router, set top box, media centre, mobile device, etc. The game manager client also acts as middleware, providing a set of APIs that allows the one or more GLVs to interface with the components in the gaming platform (see below) and to communicate with one or more network enabled toys. The game manager client also allows messages to be sent between the network enabled toy, the gateway and the gaming platform. As discussed above, the GLV may provide a UI for display to a user of a network enabled toy and the game manager client further comprises a display adaptation engine that controls the display of the UI in accordance with the hardware that is available for its display. The gateway further comprises a scoreboard which is able to render different UI themes (which may be based in a user selection, user generated content, geographical location base using a context awareness web service , etc.) to display the scores of one of more users for a range of games and/or user groups, based on data retrieved from the score server and the user profile database (see below).

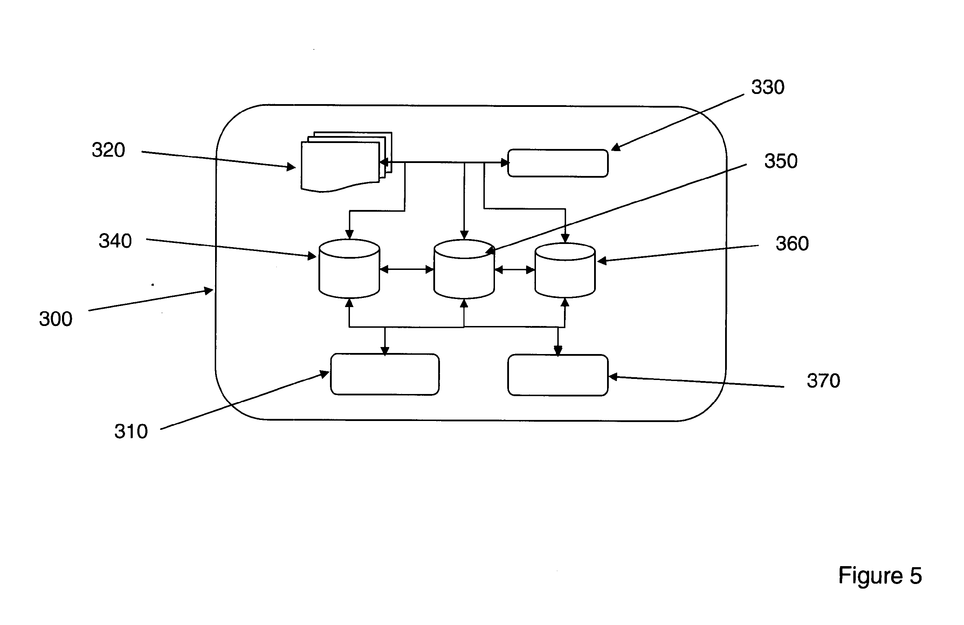

Referring to Figure 5, there is also shown a schematic depiction of the gaming platform 300, which comprises a game manager server 310, one or more GLVs 320, a Parlay interface 330, score server 340, user profile server 350, media server 360 and context aware web service 370. The gaming platform is in communication with a plurality of gateways 200 via a broadband network connection, although for the sake of clarity only a single gateway is shown in Figure 1. The game manager server 310 provides an API that allows the gateway to communicate with the gaming platform and to interact with the other components of the platform. The game manager server allows new GLVs to be downloaded to and stored on the gaming platform by a GLV developer (see below) and also controls communications between the gaming platform (or gaming platform components) and other communications networks and entities. The gaming platform comprises a plurality of GLVs 320 which are available for download from the gaming platform to a gateway: the structure and function of the GLVs are as described above with reference to Figure 4.

The score server 340 comprises a database comprising score data for a number of different games and a number of different game players. Preferably the score server also comprises an API that enables the score data to be accessed from other networks, for example from the web or from a mobile telephone (or similar device). The user profile server 350 comprises a database that stores data relating to registered game players and is capable of interfacing with the Parlay interface such that the game player data may be accessed and/or updated from a user database from a telecommunications network or operator. The media server 360 stores multimedia data files for use by the gaming platform or one or more games, for example audio files for use in announcing user performance or ranking or user generated content, such as user photos for use in high score tables, user rankings, etc. The media server may also provide a real-time text to speech (TTS) capability. The context aware web service uses information such as user location, time, presence, use of particular games, etc. to provide appropriate context aware data extracted from the internet or a range of selected information and service providers.

It will be understood that a large ISP (internet service provider) may operate a number of gaming platforms such that a gateway may communicate with more than one of the gaming platforms in order to provide competitive or collaborative play between users who are not co-located. Furthermore, it should be possible for a gateway that is in communication with a gaming platform operated by a first ISP to also establish communication with a gaming platform operated by a second ISP (or other service/content provider) such that users can play across the commercial and/or organisational boundaries.

It is envisaged that a software development kit (SDK) for the GLV may be provided to third part developers and software producers. The GLV SDK will comprise the techniques and APIs required to allow a third party to develop new games and to develop and customise new and existing content for existing games. The APIs also enable communications between a network enabled toy, a gateway and one or more gaming platforms.

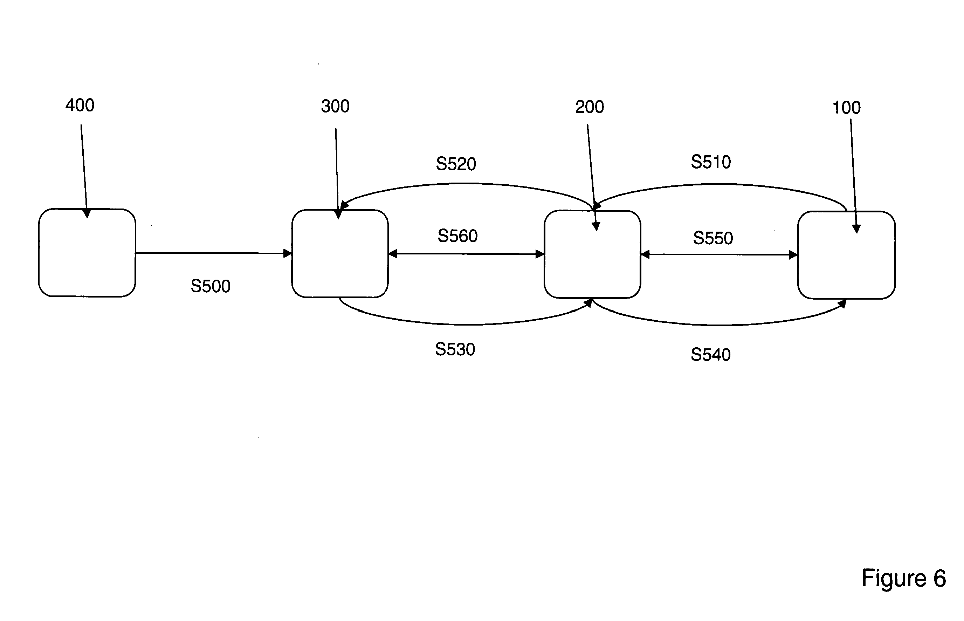

Figure 6 shows a schematic depiction of a method according to the present invention by which a GLV may be deployed to a gaming platform, a gateway or a network enabled toy. Figure 6 shows a network enabled toy 100, a gateway 200, a gaming platform 300 and a GLV developer 400. Initially, a GLV developer develops a new GLV, comprising game logic, game dependencies and a plurality of XML files. At step S500 the GLV is uploaded to a gaming platform (in reality the GLV will be uploaded to a plurality of gaming platforms but for the sake of simplicity only a single platform is shown in Figure 6): the GLV may be designed to be played on either an existing network enabled toy or a new supported toy. The GLV is processed by the gaming platform to access the XML configuration files held within the GLV. These XML files are used to determine the actions that must be taken when a request is received to download the GLV to a gateway.

At step S510 a request to access a game is sent by a network enabled toy 100 to the gateway 200. This request may be due to a user requesting access to a new game for an existing network enabled toy or by registering a new network enabled toy with the gateway. If the gateway does not already hold the relevant GLV for that game then the gateway sends a request to the gaming platform (S520). If the request for a game is valid then the gaming platform sends the appropriate GLV to the gateway (step S530), in accordance with the XML configuration files extracted during step S500. The user profile in the user profile server is also updated to indicate that the user has subscribed to the game. If required, a message may be sent via the Parlay interface such that a charge can be made to a billing account.

The gateway extracts the XML files and game dependencies and stores these within the gateway. The gateway also extracts the game logic from the GLV and sends this to the network enabled toy (step S540), which stores the game logic in either the fixed or the removable storage unit. The toy can now be used with the additional functionality or game play provided by the game logic. During the playing of the game, the toy may need to access some of the data held within a game dependency file, and a request is sent to the gateway at step S550. The gateway will respond by returning the requested data so that, for example, an appropriate image can be displayed or a sound file played. Also, during the playing of the game the toy may send a request to the gateway (S550) that can only be fulfilled by the gaming platform, for example using the TTS functionality of the media server to play back a speech message at the toy that is not held as a pre-recorded audio file in the game dependency files. In such a case, the requested functionality is returned to the toy from the gaming platform, via the gateway. Periodically, or at the end of each game or game session, user data and/or score data will be passed from the toy to the gateway to enable the scoreboard to be updated; this data is also transmitted to the gaming platform so that the user profile server and the score server can be updated.

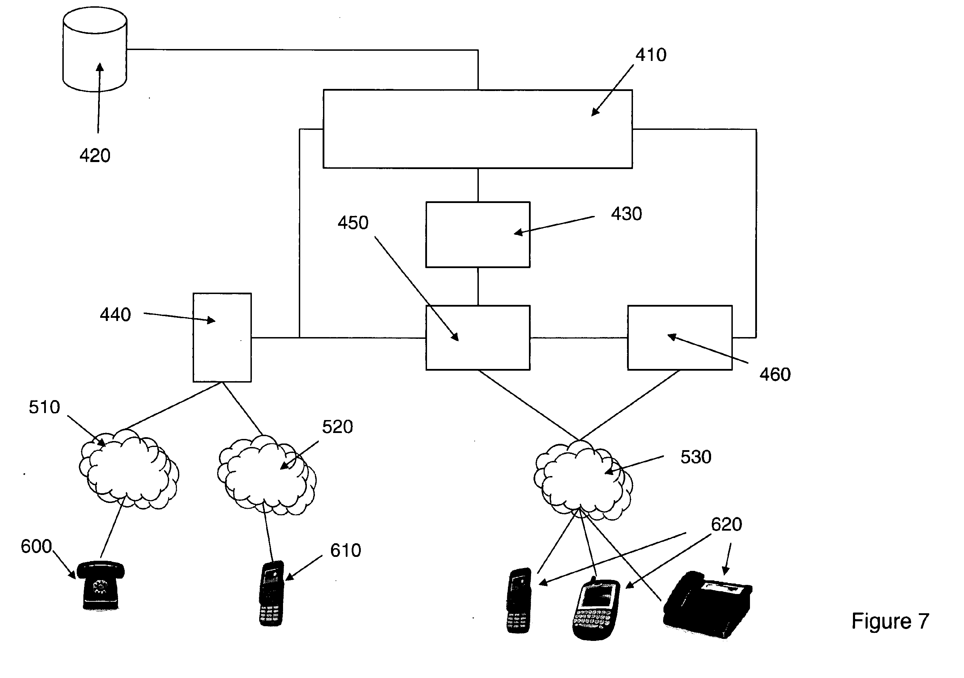

Figure 7 shows a schematic depiction of the game pad interface 400, which comprises proxy 410, game profile database 420, gamepad manager 430, VoIP (voice over IP) gateway 440, VoIP/PBX server 450 and virtual gamepad GUI manager 460. The VoIP gateway has connections to one or more PSTN networks 510 and/or one or more GSM (or other mobile technology-based) mobile communications networks 520. This enables conventional fixed line 600 or mobile 620 telephones to connect to the VoIP gateway. The VoIP/PBX server 450 and the virtual gamepad GUI manager 460 are connected to the internet 530, enabling communication with a range of devices that may support a virtual gamepad, such as a PDA, IP phone, a VoIP enabled mobile phone or a device capable of running a softphone application.

In additional to the network enabled toys discussed above, the game pad interface allows users to play games using alternative communication devices. For example, mobile phones, IP phones, soft phones, PSTN phones, computers, etc. may be used as virtual gamepads to enable a user to participate in a game. Such a virtual gamepad may provide all of, or a subset of, the functionality provided by a network enabled toy. For example, a mobile phone which has the sound and display capabilities will allow users to listen to game instructions and music and to view the graphical user interface (GUI) of a game during a game session. Alternatively, users with an Internet Protocol (IP) phone which does not have a screen display will only be able to listen to game instructions and music when they are playing game. User input can be detected from by key presses on a physical keypad (e.g. mobile phone and PSTN phone), soft keypad, voice input etc, depending on the nature of the device. Key press input can be sent to the game server as Dual-tone Multi-frequency (DTMF) signalling. Voice input can be transmitted to the game server and being translated into a text instruction using speech-to-text functionality.

It is envisaged that a virtual gamepad may take different forms, dependent upon the requirements of the game that is being played and the amount of game content that needs to be installed on or downloaded to the virtual gamepad. The following three types of gamepads have been identified but it will be understood that further types may be defined and used as appropriate:
- Dummy virtual gamepad - No additional software or tool is installed to the device. It uses third-party software or features to perform the game functionalities.
- Thin virtual gamepad - Additional software or tool is installed to the device to work with other functionalities of the device. It uses combination of third-party software or features and game developer defined software to perform the full functions of game play - e.g. a mobile phone uses a built-in VoIP client for sound and an additional J2ME game client is installed for GUI.
- Fat virtual gamepad - A software(s) or tool(s) with full functionalities of game play is installed or downloaded to the device. E.g. a laptop runs a web-based game client.

The virtual gamepad GUI manager 460 handles graphical display tasks for virtual gamepads that support GUI display. It sends an initiation message to launch a GUI client on a virtual gamepad. It also sends messages to a GUI client to display graphics accordingly during a game session (e.g. game instructions, user scores, etc.). There are different methods by which messages may be transmitted to a GUI client. One method is by sending datagram messages to a GUI client through socket connection. If a SIP-based GUI client is used on the virtual gamepad, SIP MESSAGE (RFC 3428) can also be used to embed the necessary messages and to be sent to the GUI client for this purpose.

A VoIP and IP-PBX server 450, such as, for example, Asterisk [see www.asterisk.org] allows attached phones to make calls to one another, and to connect to other telephony services. Within the Virtual Gamepad system, it is used as the communication interface between the phones and the Game server. Among the main VoIP protocols and features offered by such VoIP/IP-PBX servers, those that are used in the present invention are SIP, Interactive Voice Response (IVR) and Application Gateway Interface (AGI). The VoIP/IP-PBX servers also handles the following tasks:
- SIP user registration - user can have different SIP URIs for different devices that they own. For example, John has a mobile phone (sip:9001@bbtoys.com) and an IP phone (sip:9002@bbtoys.com). When John logs in using his mobile phone, the system identifies the device based on the SIP URI.
- Voice session - voice session between a virtual gamepad and VoIP server is established during game session using SIP signalling. There are two audio channels being setup where game instruction and music are being transmitted to a virtual gamepad and user's voice is captured by VoIP client on the virtual gamepad and being sent to the VoIP server.
- Voice recording - it has the capability to record voice and save it in media server for future usage.

The gamepad manager 430 provides a standard interface by which external programs may control the VoIP and IP-PBX functionalities (e.g. dial plan), do advanced logic, communicate with relational databases, and access other external resources. Its main function is to relay the instruction from the VoIP/IP-PBX server to the proxy. The other functionalities of the gamepad manager are:
- It detects an incoming connection from VoIP server and dynamically launches proxy of certain configuration and communication mode, that match a specific game service.
- It identifies the communication method of the virtual gamepad that is involved in the game.
- It determines the appropriate content (voice and graphic) to be sent to the virtual gamepad when a game is initiated.
- It identifies the appropriate dial plan to be used in VoIP Server based on the game profile and user information (e.g. virtual gamepad device type, communication method, device capabilities, etc.).
- It notifies the virtual gamepad GUI Manager to send appropriate GUI information.

The proxy module 410 acts as an intermediary component, which serves as a translator between the Service Platform and different heterogeneous devices. The translator is a self-contained component that converts non-conforming devices input into toy instructions. In this context, it converts the DTMF input into socket data understandable by the toy. The converted data will be forwarded to the toy for processing. The conversion will take place (in real-time) whenever there is data received at the proxy, from the Gamepad Manager.

The complexity of the conversion is reduced as much as possible for faster and more efficient processing, for example lesser overhead types, lower frequency of the communicating messages sent and so forth. The proxy will mediate the data to see if it is compatible and of the correct format to filter off erroneous data. Filtering has a set of defined properties to verify the integrity and accountability of the input. Various filters are used to filter the different sets of inputs as exhibited by the different game status; before, during and after game play modes.

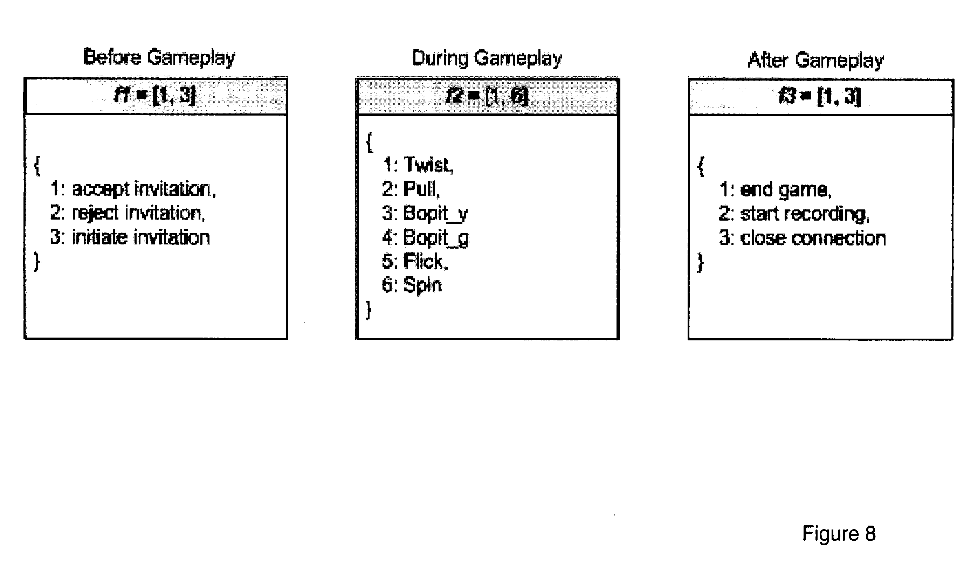

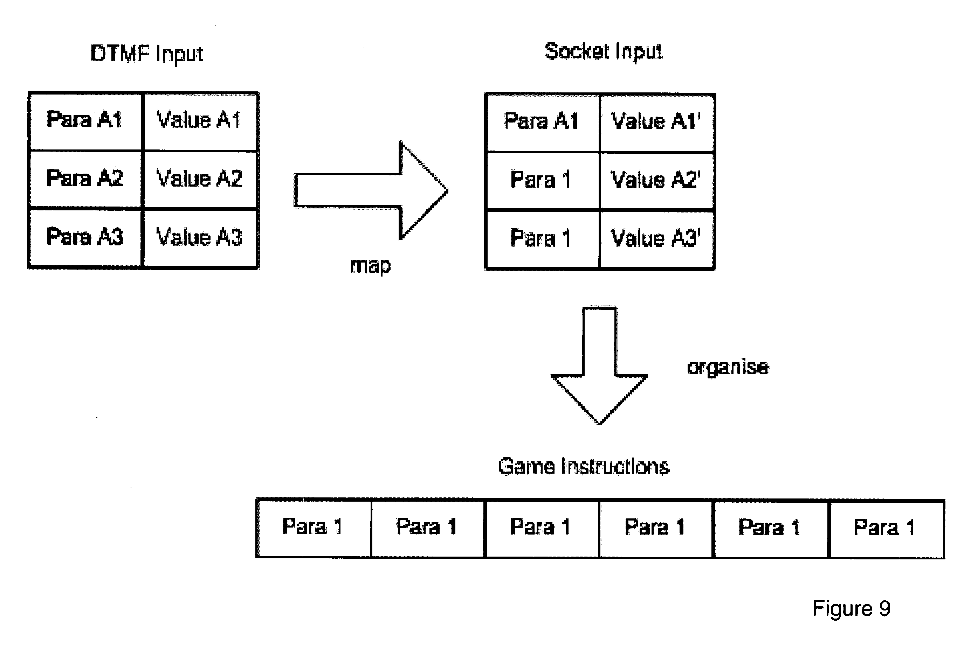

Referring to Figure 8, f1, f2 and f3 define the functions with the correspondent acceptable input values. The proxy will check the syntax and the required parameters in the DTMF input. Then, the input will go through a series of attributes matching against the libraries to extract out the attribute values. The extracted information will be translated to a form, which is the game instruction. Figure 9 shows a flow of the mediation on how the input data will be mapped to output data. It shows that there could be many possible ways of translating the input data and format to suit different applications needs as will be described in the following paragraph on the registry component. Table 1 below illustrates the actual data representation of both the pre and post converted data.

**Table 1: Exemplary data conversion values**

| **Virtual Gamepad Input** | **Game Instructions** |
|---|---|
| 1 | Twist |
| 2 | Pull |
| 3 | Bopit_Y |
| 4 | Bopit_G |
| 5 | Flick |
| 6 | Spin |

The proxy further comprises a registry which layer functions to register the list of applications that the proxy is hosting. Having a rich set and open interfaces, the proxy could be extended beyond offering a toy platform service depending on the type of registered applications. Instead of translating and forwarding the DTMF input to the toy, it could be forwarded to other applications like home controlling and so forth. Thus, it could potentially be used for other communication systems. For example, Application A and Application B are registered to the proxy at the registry layer. These applications will listen for input D. Once input D is received by the proxy, it will be forwarded to the Application A and B respectively for further processing. However, an Application C will not receive the input D because it is not registered appropriately with the proxy.

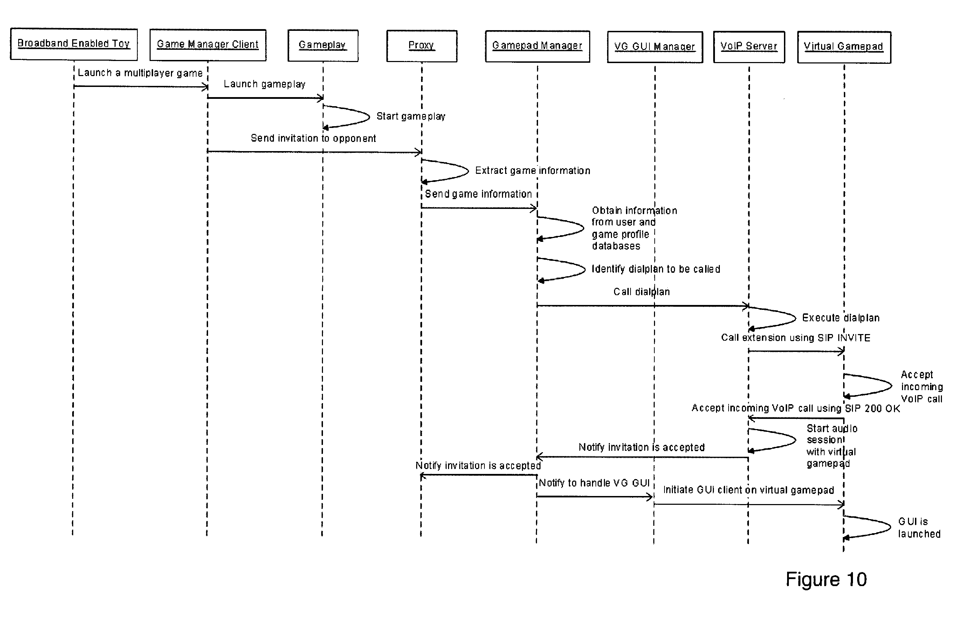

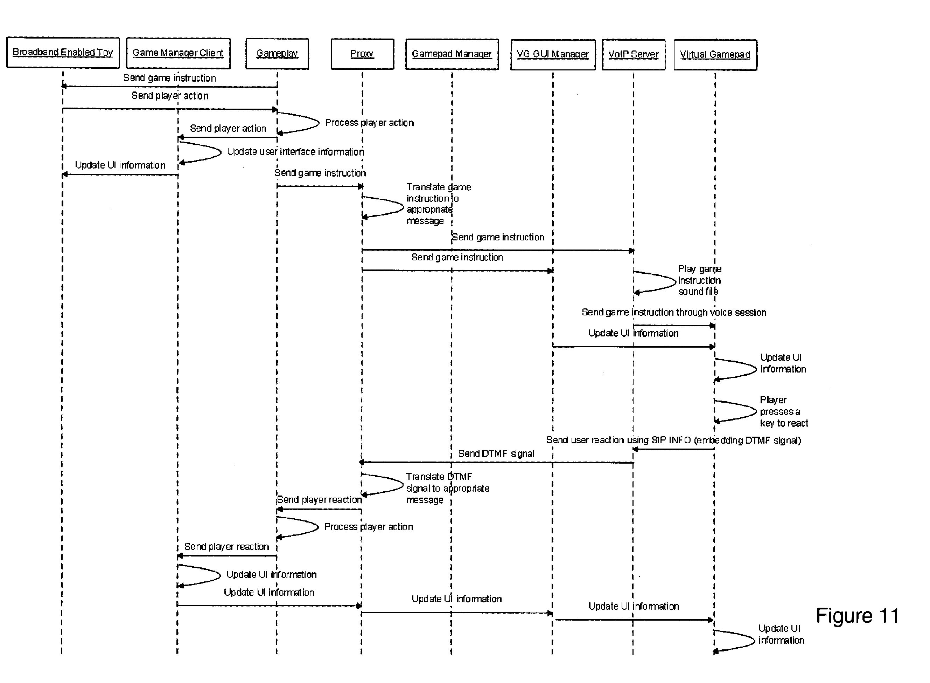

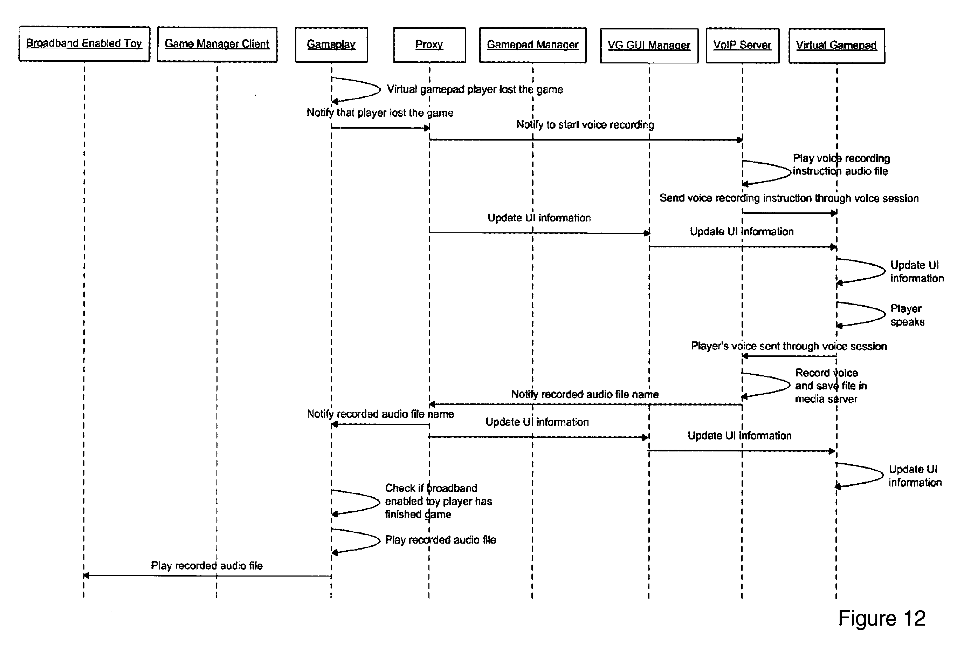

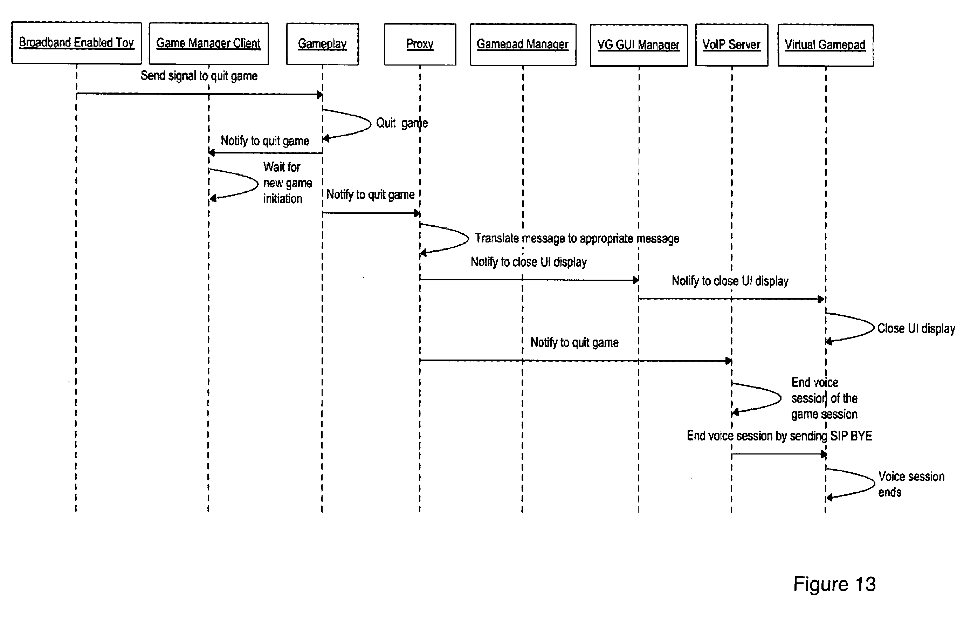

The sequence by which a game is set up is described in Figure 10; Figure 11 shows the operation of a system according to the present invention during a game session; Figure 12 describes a process in which a voice message may be recorded after the end of a game session; and Figure 13 describes a process which terminates a game session.

It will be understood that a network enabled toy may have one of a number of forms. It may come as a standalone toy to which the network functionality can be added by the addition of an appropropriate communications interface, or it may be supplied in a condition where it can communicate with a gateway. The toy may be supplied comprising the logic for one or more games which can be played immediately. Alternatively it may be necessary to send a request to the gateway of the gaming platform to download game logic or to provide a key or access code to enable a stored game logic to be accessed. An example of the sort of toy that could be modified to be used with the present invention is the Bop It manufactured by Hasbro.

It will be understood that the performance of a network enabled toy may be emulated using an appropriate combination of hardware and software. For example, it would be possible to use a WiFi or Bluetooth enabled mobile telephone to connect to the user gateway locally. If a suitable connection can be made, for example using a high speed cellular network connection then it may be possible for a mobile telephone to connect to the user gateway remotely and to then interact with other users.

The network enabled toy may communicate with the gateway using a wireless communications protocol such as Bluetooth, WiFi, IrDA, etc. It is also possible for a wired connection to be used (for example using a USB connector) with the toy. The gateway may be a broadband router, such as the BT Home Hub, or an associated piece of equipment that is connected to a broadband network such as a BT Vision set top box. It will be understood that the functionality of the gateway is provided by the use of software and thus the gateway functionality may be provided by pushing a firmware upgrade to the device. It will be understood that software for enabling the gateway functionality may also be provided to a gaming console (such as a Playstation 3 or Xbox 360) or personal computer that is connected to a broadband network. If the network gateway has access to a display unit, such as a television or a PC monitor then this display unit may be used to display game scores, user data, or other data relating to game being played or a user. It will be understood that the present invention will be implemented as a program or software component that will be executed by a computer. Software implementing a method according to the present invention may be supplied on physical media (such as a USB drive, CD-ROM, DVD, etc) or supplied or made available for transfer or download via a communications network.

## Claims

1. A communications network comprising a gaming platform, the gaming platform being in communication with a user gateway, the user gateway being connected to the communications network and, in use, also being in communication with a gaming device, wherein the gaming platform is further connected to a communication interface, the communication interface enabling the connection of conventional communication devices to the gaming platform and, in use, with a gaming device.

2. A communications network according to claim 1, wherein, in use, in response to a request from the gaming device, gaming software is transmitted from the user gateway to the gaming device.

3. A communications network according to claim 2, wherein, in use, in response to the request from the gaming device, the user gateway transmits game logic data to the gaming device.

4. A communications network according to claim 2 or claim 3, wherein, in use, the user gateway stores game content data within the user gateway, the content being played back to a user in response to a subsequent request from the gaming device.

5. A communications network according to claim 2, wherein if the user gateway is unable to meet the request from the gaming device, the user gateway sends a request to the gaming platform wherein, in use, the gaming platform transmits the gaming software to the user gateway.

6. A communications network according to any of claims 1 to 5, wherein the gaming device comprises a storage device such that, in use, the gaming device receives game logic data from the user gateway, the game logic data being stored in the storage device.

7. A communications network according to claim 6, wherein the gaming device further comprises a removable storage means, wherein the removable storage means comprises game logic data.

8. A communications network according to claim 6 or claim 7, wherein the gaming device further comprises a processing unit for, in use, executing the game logic data.

9. A communications network according to any of Claims 1 to 8, the user gateway further comprising one or more software repositories, wherein the or each software repository comprises data for one or more games, said data comprising configuration data and or content data for one or more games.

10. A communications network according to any of claims 1 to 9, wherein the gaming platform is in communication, in use, with a user gateway via a broadband network.

11. A communications network according to any of claims 1 to 10, wherein the gaming platform further comprises an interface for, in use, communicating with a telecommunications network.

12. A communications network according to any of claims 1 to 11, the gaming platform further comprising one or more software repositories, wherein the or each software repository comprises data for one or more games.

13. A communications network according to Claim 12, wherein the or each software repository comprises configuration data for one or more games and content data for one or more games.

14. A method of providing data over a communications network, wherein the network comprises: a gaming platform; a user gateway connected to the communications network; and a gaming device in communication with the user gateway the method comprising the step of transmitting gaming software from the user gateway to the gaming device in response to a request from the gaming device.

15. A computer program product, comprising computer executable code for performing a method according to Claim 14.
